# FASCICULE DE BREVET EUROPEEN

(11) **EP 3 164 589 B1**
(45) Date de publication et mention de la délivrance du brevet: **16.05.2018**
(21) Numéro de dépôt: 15747172.3
(22) Date de dépôt: 01.07.2015
(51) Int. Cl.: F02K 1/72

(54) **NACELLE DE TURBOREACTEUR EQUIPEE D'UN INVERSEUR DE POUSSEE, COMPRENANT DES DECOUPES D'EVITEMENT DU BEC MOBILE D'UNE AILE D'AERONEF**
TURBOSTRAHLGONDEL MIT EINER SCHUBUMKEHRVORRICHTUNG MIT AUSSTANZUNGEN ZUR VERMEIDUNG DER BEWEGLICHEN LAMELLE EINES FLUGZEUGFLÜGELS
TURBOJET NACELLE PROVIDED WITH A THRUST REVERSER, INCLUDING CUT-OUTS TO AVOID THE MOVABLE SLAT OF AN AIRCRAFT WING

(30) Priorité: 01.07.2014 FR 1456281
(43) Date de publication de la demande: 10.05.2017
(73) Titulaire: Safran Nacelles, 76700 Gonfreville-l'Orcher (FR)
(72) Inventeur: BOILEAU, Patrick, F-31170 Tournefeuille (FR)
(74) Mandataire: Gaillarde, Frédéric F. Ch.
(86) Numéro de dépôt international: PCT/FR2015/051818
(87) Numéro de publication internationale: WO 2016/001587

(56) Documents cités:
- EP-A2- 2 620 627
- WO-A1-2014/052061
- FR-A1- 2 933 143
- FR-A1- 2 968 635

## Description

La présente invention concerne un inverseur de poussée pour une nacelle d'aéronef recevant un turboréacteur, ainsi qu'une nacelle d'aéronef équipée d'un tel inverseur de poussée.

Les ensembles de motorisation à turboréacteur pour les aéronefs comportent une nacelle formant une enveloppe extérieure globalement circulaire, comprenant à l'intérieur le turboréacteur disposé suivant l'axe longitudinal de cette nacelle.

Le turboréacteur reçoit de l'air frais venant du côté amont ou avant, et rejette du côté aval ou arrière les gaz chauds issus de la combustion du carburant, qui donnent une certaine poussée. Pour les turboréacteurs à double flux, des aubes de soufflante disposées autour du moteur génèrent un flux secondaire important d'air froid le long d'une veine annulaire passant entre ce moteur et la nacelle, qui ajoute une poussée élevée.

Certaines nacelles comportent un système d'inversion de poussée qui ferme au moins en partie la veine annulaire d'air froid, et rejette le flux secondaire vers l'avant afin de générer une poussée inversée de freinage de l'aéronef.

Un type d'inverseur de poussée connu, présenté notamment par le document FR-A1-2758161, comporte des capots mobiles arrière coulissant axialement vers l'aval sous l'effet de vérins, en déployant des volets dans la veine annulaire afin de fermer au moins partiellement cette veine. Ces volets renvoient le flux d'air froid radialement vers l'extérieur en passant par des grilles découvertes lors du coulissement, comprenant des aubes qui dirigent ce flux vers l'avant.

Par ailleurs les ailes de certains aéronefs comportent des becs mobiles de bord d'attaque qui se déploient vers l'avant et vers le bas afin de modifier les caractéristiques aérodynamiques de ces ailes, en particulier lors du vol à faible vitesse pour l'atterrissage.

Dans ce cas, en particulier pour les nacelles de grand diamètre disposées à proximité des ailes afin de conserver une garde au sol suffisante en dessous, on peut obtenir une interférence entre le bec mobile de bord d'attaque déployé, et les capots mobiles quand ils reculent pour mettre en oeuvre l'inverseur de poussée.

Afin d'éviter cette interférence, un type de nacelle connu, présenté notamment par les documents FR-A1-2968635 et EP-A2-2620627, comporte de chaque côté du pylône vertical soutenant la nacelle, dans la zone proche du bord d'attaque de l'aile se trouvant sur le dessus de cette nacelle, un petit capot fixe qui complète le capot mobile pour fermer l'entourage annulaire complet de la nacelle. Dans ce cas le petit capot fixe ne reculant pas lors de l'ouverture du capot, on élimine le risque d'interférence avec le bec mobile de bord d'attaque.

Toutefois ces deux petits capots fixes ne s'ouvrant pas, ils réduisent sur le secteur angulaire qu'ils couvrent le flux d'air lors de l'inversion de poussée, et donc la poussée de freinage délivrée par cet inverseur.

La présente invention a notamment pour but d'éviter ces inconvénients de la technique antérieure.

Elle propose à cet effet une nacelle de turboréacteur à double flux comprenant un inverseur de poussée, l'inverseur de poussée comprenant un capot mobile reculant d'une position fermée où la poussée n'est pas inversée à une position ouverte pour découvrir des grilles inversant le sens du flux d'air froid qui est dévié de la veine annulaire d'air secondaire, le capot mobile comportant une partie radialement externe destinée à venir à proximité d'un bord d'attaque d'une aile d'un aéronef, remarquable en ce que le capot mobile comporte sur la partie radialement externe au moins une découpe destinée à éviter une interférence avec un bec mobile du bord d'attaque de l'aile de l'aéronef, ainsi qu'un panneau de fermeture de la découpe, le panneau de fermeture comprenant une partie fixe par rapport à la nacelle au moins partiellement recouverte par une portion amont du capot mobile lorsque le capot mobile est en position ouverte.

Ainsi, la présente invention tire parti de la forme du capot mobile, généralement sensiblement bombée, qui lorsqu'il recule passe par-dessus la partie fixe du panneau de fermeture.

La nacelle selon l'invention peut comporter de plus une ou plusieurs des caractéristiques suivantes, qui peuvent être combinées entre elles.

Selon un mode de réalisation, la découpe du capot mobile ne se prolonge pas jusqu'à l'extrémité amont du capot mobile, et peut présenter un contour ajusté autour de la zone d'interférence entre le capot mobile et le bec mobile du bord d'attaque, la découpe permet ainsi d'éviter un contact entre le bec et le capot mobile avec un minimum d'impact sur la structure de la nacelle, et tout en préservant la qualité aérodynamique de la nacelle grâce au panneau de fermeture qui vient rétablir une continuité de la surface extérieure de la nacelle lorsque le capot mobile est en position fermée.

À noter que l'on utilise indifféremment les termes amont et avant, et de la même manière les termes aval et arrière.

Des simplifications structurelles sont donc possibles, notamment la possibilité de conserver le positionnement d'un rail secondaire de la nacelle sur une poutre 12H de la nacelle, sur lequel sont repris des efforts induits par l'installation du capot mobile de l'inverseur de poussée en liaison avec le rail secondaire. Ce qui signifie qu'il n'est pas nécessaire de déporter la position du rail secondaire par rapport à la poutre 12H de la nacelle.

D'autre part, puisque la découpe est ajustée, l'encombrement du panneau de fermeture est réduit au strict minimum, ainsi, en position ouverte du capot mobile, la surface effectivement découverte des grilles de l'inverseur de poussée est accrue, rendant plus efficace le freinage par inversion de poussée.

Selon un autre mode de réalisation, le panneau de fermeture est intégralement fixe dans la nacelle. On obtient ainsi un inverseur de poussée simple et économique.

Selon un autre mode de réalisation, le panneau de fermeture comprend une partie mobile se déplaçant vers l'aval de la nacelle avec le coulissement du capot mobile.

Dans ce cas, l'inverseur de poussée peut comporter des moyens décalant la partie mobile du panneau de fermeture radialement vers l'intérieur de la nacelle lors de son déplacement vers l'aval de la nacelle.

Avantageusement, la partie mobile du panneau de fermeture se trouve en amont de la partie fixe du panneau de fermeture quand le capot mobile est en position fermée. Elle peut ainsi accroître encore la surface effectivement découverte des grilles de l'inverseur de poussée pour optimiser son fonctionnement lorsque le capot mobile est en position ouverte.

Le panneau de fermeture peut comporter une surface radialement externe qui est dans le prolongement de celle des capots mobiles. On obtient ainsi une traînée marginale de la nacelle quand le capot mobile est fermé.

En particulier, le capot mobile peut comporter de chaque côté de l'emplacement destiné à recevoir une poutre soutenant le capot mobile, une découpe recevant un panneau de fermeture.

La nacelle peut aussi comprendre

L'invention a aussi pour objet un aéronef comportant une nacelle comprenant l'une quelconque des caractéristiques précédentes.

L'invention sera mieux comprise et d'autres caractéristiques et avantages apparaîtront plus clairement à la lecture de la description ci-après, donnée à titre d'exemple en référence aux dessins annexés dans lesquels :
- les figures 1 et 2 sont des vues respectivement extérieure et en coupe axiale, d'un inverseur de poussée selon l'invention présenté dans la position fermée ;
- les figures 3 et 4 sont des vues respectivement extérieure et en coupe axiale, de cet inverseur dans la position déployée ;
- les figures 5 et 6 sont des vues respectivement en coupe axiale et de détail de l'inverseur dans la position fermée, comportant un panneau de fermeture suivant une variante ; et
- les figures 7 et 8 sont des vues respectivement en coupe axiale et de détail de cet inverseur dans la position déployée.

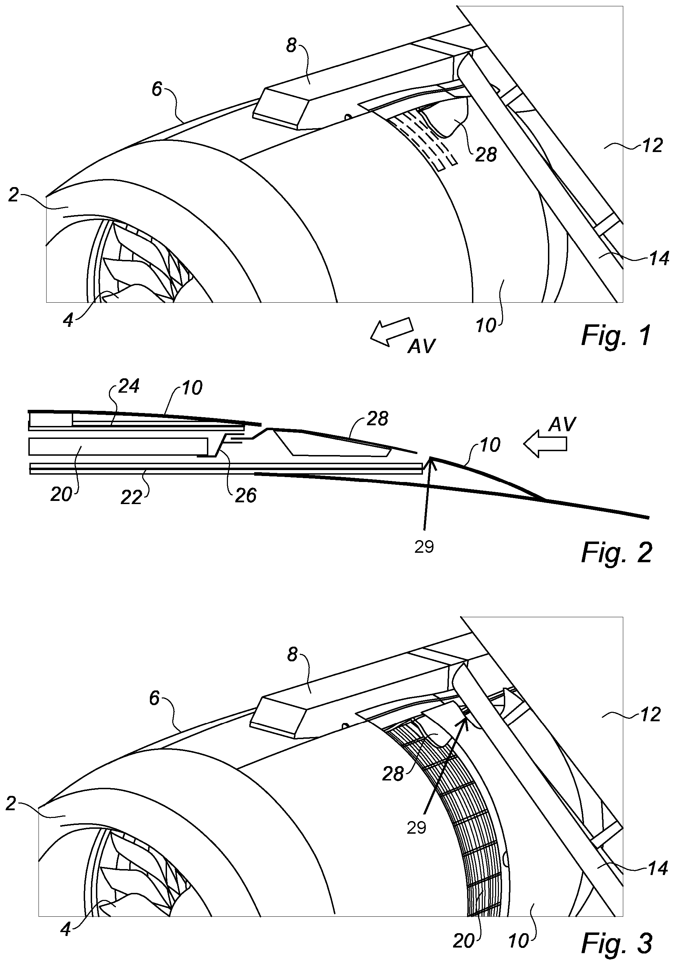

Les figures 1 et 2 présentent une nacelle de turboréacteur suspendue à un pylône, par le biais d'une poutre 8, disposé dans un plan vertical,
comportant une entrée d'air avant 2 entourant des aubes de compresseur 4, puis en partant vers l'aval, des capots fixes 6 entourant la partie centrale, et deux capots mobiles 10 formant chacun sensiblement un demi-cercle, qui rejoignent en partie supérieure la poutre 8.

Les capots mobiles 10 sont guidés par des rails longitudinaux qui encadrent radialement des grilles 20 installées autour de la nacelle, comportant des aubes de redressement du flux d'air frais vers l'amont. Des rails primaires 22 sont disposés radialement vers l'intérieur des grilles 20, et des rails secondaires 24 vers l'extérieur.

Les grilles 20 sont supportées du côté aval par un cadre arrière fixe 26, qui forme une structure porteuse circulaire autour de la nacelle.

Chaque capot mobile 10 comporte dans sa partie supérieure, à côté de la poutre 8, une découpe 29 située entre ses extrémités amont et aval, qui reçoit un panneau de fermeture 28 refermant complètement cette ouverture quand l'inverseur de poussée est dans sa position fermée.

Chaque panneau de fermeture 28 maintenu par le cadre arrière 26 dans une position fixe, comporte une surface venant dans la continuité de la surface extérieure de son capot mobile 10.

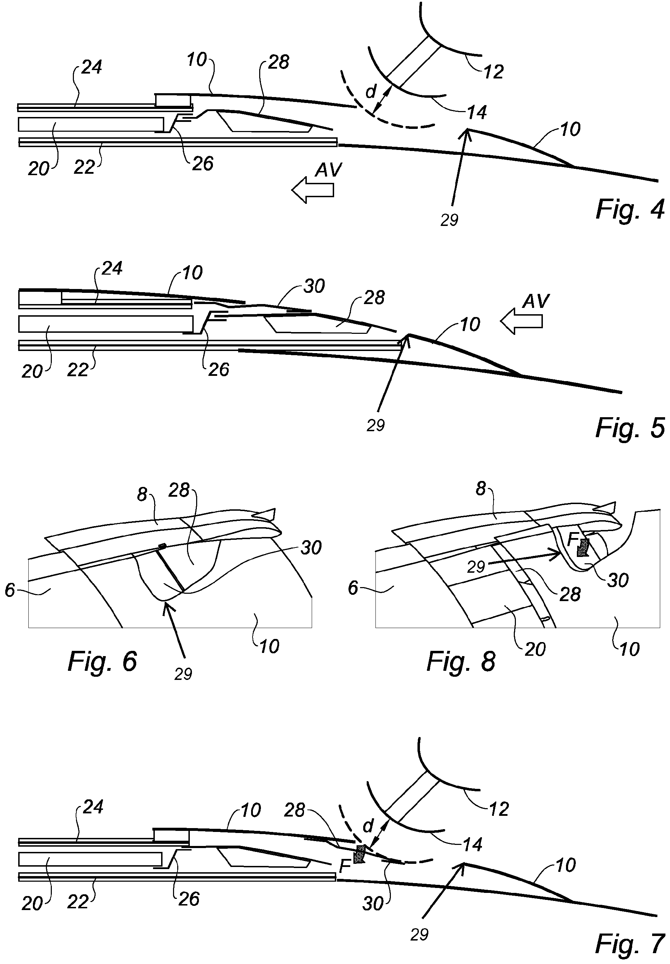

Les figures 3 et 4 présentent l'inverseur de poussée déployé, comportant les capots mobiles 10 qui ont reculé sous l'effet d'actionneurs de commande. Les becs mobiles 14 des bords d'attaque des ailes 12 sont entièrement déployés pour venir vers l'avant et vers le bas, afin d'améliorer la sustentation des ailes aux basses vitesses lors de l'atterrissage.

Dans ce cas de chaque côté de la poutre 8, le panneau de fermeture 28 est resté dans sa position d'origine en ouvrant la découpe 29 du capot mobile 10, la partie du bec mobile 14 la plus proche de la nacelle venant à proximité de cette découpe 29 avec une distance de sécurité d. On évite ainsi un risque de contact entre ces deux éléments, qui pourrait causer une usure et une défaillance.

On notera que la découpe du capot mobile 10 étant restreinte suivant l'espace nécessaire pour la proximité du bec mobile 14, on obtient une découpe 29 de dimension réduite qui permet de ne pas limiter les performances de l'inverseur dans cette position.

Par ailleurs dans la position de vol normal, le panneau de fermeture 28 venant dans la continuité de la surface du capot mobile 10, on n'a pas de perte aérodynamique.

On notera que dans certaines configurations les capots mobiles 10 étant déployés, chaque panneau de fermeture 28 comporte une partie avant qui vient couvrir les grilles 20, et donc limiter le flux inversé. On a alors une petite réduction de la poussée du flux inversé.

Les figures 5 et 6 présentent un panneau de fermeture 28 réalisé en deux parties, une partie arrière fixe liée à la poutre 8 et au cadre arrière 26, et une partie avant mobile 30 liée au capot mobile 10 de manière à coulisser vers l'aval en même temps que lui. La partie avant mobile 30 du panneau de fermeture est articulée ou déformable, elle se décale vers l'intérieur de la nacelle guidée par une cinématique quand le capot mobile 10 recule.

Dans son mouvement de coulissement vers l'aval entraîné par le capot mobile 10, présenté par les figures 7 et 8, un moyen mécanique de commande de la partie avant mobile 30 du panneau de fermeture, comme une came, déforme ou fait pivoter cette partie comme présenté par la flèche F de manière à se rapprocher de l'axe de la nacelle. On obtient ainsi une surface extérieure de la partie mobile 30, qui s'éloigne du bec mobile 14 de l'aile 12 dans sa position déployée.

En variante on peut prévoir un panneau de fermeture 28 complètement rigide, coulissant vers l'arrière avec le capot mobile 10, qui dans ce mouvement s'incline ou se décale entièrement vers l'intérieur de la nacelle.

On notera que les parties avant mobiles 30 des panneaux de fermeture coulissant vers l'arrière avec le déploiement des capots mobiles 10, elles dégagent ainsi entièrement les deux secteurs des grilles 20 disposés de chaque côté de la poutre 8, pour donner le flux d'inversion maximum.

On obtient ainsi sans modifier les guidages des capots mobiles 10 intégrés à la poutre 8, les grilles d'inversion 20 et les cadres 26 supportant ces grilles, en gardant une architecture classique des inverseurs de poussée, et avec une faible masse supplémentaire, une optimisation du fonctionnement de l'inverseur, et de la traînée de la nacelle dans toutes les positions de cet inverseur.

## Revendications

1. Nacelle de turboréacteur à double flux comprenant un inverseur de poussée, l'inverseur de poussée comprenant un capot mobile (10) reculant d'une position fermée où la poussée n'est pas inversée à une position ouverte pour découvrir des grilles (20) inversant le sens du flux d'air froid qui est dévié de la veine annulaire d'air secondaire, le capot mobile comportant une partie radialement externe destinée à venir à proximité d'un bord d'attaque d'une aile (12) d'un aéronef, le capot mobile (10) comportant sur la partie radialement externe au moins une découpe (29) destinée à éviter une interférence avec un bec mobile (14) du bord d'attaque de l'aile (12) de l'aéronef, ainsi qu'un panneau de fermeture (28) de la découpe (29), la nacelle étant **caractérisée en ce que** le panneau de fermeture (28) comprend une partie fixe par rapport à la nacelle au moins partiellement recouverte par une portion amont du capot mobile (10) lorsque le capot mobile (10) est en position ouverte.

2. Nacelle selon la revendication 1, **caractérisée en ce que** la découpe (29) du capot mobile ne se prolonge pas jusqu'à l'extrémité amont du capot mobile (10).

3. Nacelle selon la revendication 1 ou 2, **caractérisée en ce que** le panneau de fermeture (28) est intégralement fixe dans la nacelle.

4. Nacelle selon la revendication 1 ou 2, **caractérisée en ce que** le panneau de fermeture (28) comprend une partie mobile (30) se déplaçant vers l'aval de la nacelle avec le coulissement du capot mobile (10).

5. Nacelle selon la revendication 4, **caractérisée en ce que** l'inverseur de poussée comporte des moyens décalant la partie mobile (30) du panneau de fermeture (28) radialement vers l'intérieur de la nacelle lors de son déplacement vers l'aval de la nacelle.

6. Nacelle selon la revendication 4 ou 5, **caractérisée en ce que** la partie mobile (30) du panneau de fermeture (28) se trouve en amont de la partie fixe du panneau de fermeture (28) quand le capot mobile (10) est en position fermée.

7. Nacelle selon l'une quelconque des revendications précédentes, **caractérisée en ce que** le panneau de fermeture (28) comporte une surface radialement externe qui est dans le prolongement de celle du capot mobile (10) quand ledit capot mobile (10) est en position fermée.

8. Nacelle selon l'une quelconque des revendications précédentes, **caractérisée en ce que** le capot mobile (10) comporte de chaque côté de l'emplacement destiné à recevoir une poutre (8) soutenant le capot mobile (10), une découpe recevant un panneau de fermeture (28).

9. Nacelle selon l'une quelconque des revendications précédentes, **caractérisée en ce qu'**elle comprend un rail secondaire positionné sur une poutre (8) soutenant le capot mobile (10).

10. Aéronef comportant une nacelle, **caractérisé en ce que** la nacelle est réalisée selon l'une quelconque des revendications précédentes.

## Patentansprüche

1. Doppelstrom-Turbostrahlgondel mit einer Schubumkehr, wobei die Schubumkehr eine bewegliche Abdeckung (10) umfasst, die aus einer geschlossenen Position, in welcher der Schub nicht umgekehrt ist, in eine geöffnete Position zurückfährt, um Gitter (20) aufzudecken, welche die Richtung des Kaltluftstroms umkehren, der vom Sekundärluft-Ringkanal abgelenkt wird, wobei die bewegliche Abdeckung einen radial äußeren Teil aufweist, der bestimmt ist, in die Nähe einer Anströmkante eines Flügels (12) eines Luftfahrzeugs zu kommen, wobei die bewegliche Abdeckung (10) auf dem radial äußeren Teil mindestens eine Ausstanzung (29) aufweist, die bestimmt ist, eine Interferenz mit einer beweglichen Lamelle (14) der Anströmkante des Flügels (12) des Luftfahrzeugs zu vermeiden, sowie eine Verschlussklappe (28) der Ausstanzung (29), wobei die Gondel **dadurch gekennzeichnet ist, dass** die Verschlussklappe (28) einen in Bezug zu der Gondel festen Teil umfasst, der von einem stromaufwärtigen Abschnitt der beweglichen Abdeckung (10) mindestens teilweise bedeckt ist, wenn die bewegliche Abdeckung (10) in geöffneter Position ist.

2. Gondel nach Anspruch 1, **dadurch gekennzeichnet, dass** sich die Ausstanzung (29) der beweglichen Abdeckung nicht bis zum stromaufwärtigen Ende der beweglichen Abdeckung (10) verlängert.

3. Gondel nach Anspruch 1 oder 2, **dadurch gekennzeichnet, dass** die Verschlussklappe (28) in der Gondel vollständig fest ist.

4. Gondel nach Anspruch 1 oder 2, **dadurch gekennzeichnet, dass** die Verschlussklappe (28) einen beweglichen Teil (30) umfasst, der sich mit dem Gleiten der beweglichen Abdeckung (10) stromabwärtig zur Gondel verlagert.

5. Gondel nach Anspruch 4, **dadurch gekennzeichnet, dass** die Schubumkehr Mittel aufweist, welche den beweglichen Teil (30) der Verschlussklappe (28) bei seiner stromabwärtigen Verlagerung zur Gondel radial in das Innere der Gondel versetzen.

6. Gondel nach Anspruch 4 oder 5, **dadurch gekennzeichnet, dass** sich der bewegliche Teil (30) der Verschlussklappe (28) stromaufwärtig vom festen Teil der Verschlussklappe (28) befindet, wenn die bewegliche Abdeckung (10) in geschlossener Position ist.

7. Gondel nach einem der vorangehenden Ansprüche, **dadurch gekennzeichnet, dass** die Verschlussklappe (28) eine radial äußere Fläche aufweist, die in der Verlängerung derjenigen der beweglichen Abdeckung (10) ist, wenn die bewegliche Abdeckung (10) in geschlossener Position ist.

8. Gondel nach einem der vorangehenden Ansprüche, **dadurch gekennzeichnet, dass** die bewegliche Abdeckung (10) auf jeder Seite der Stelle, die bestimmt ist, einen Träger (8) zu empfangen, der die bewegliche Abdeckung (10) stützt, eine Ausstanzung aufweist, die eine Verschlussklappe (28) empfängt.

9. Gondel nach einem der vorangehenden Ansprüche, **dadurch gekennzeichnet, dass** sie eine sekundäre Schiene umfasst, die auf einem Träger (8) positioniert ist, der die bewegliche Abdeckung (10) stützt.

10. Luftfahrzeug, aufweisend eine Gondel, **dadurch gekennzeichnet, dass** die Gondel nach einem der vorangehenden Ansprüche hergestellt ist.

## Claims

1. A nacelle for a turbofan engine comprising a thrust reverser, the thrust reverser comprising a movable cowl (10) retracting from a closed position where the thrust is not reversed to an open position in order to uncover cascades (20) reversing the direction of the cold air flow which is diverted from the annular secondary air flow path, the movable cowl including a radially outer part intended to come close to a leading edge of a wing (12) of an aircraft, the movable cowl (10) including on the radially outer part at least one cutout (29) intended to avoid an interference with a movable slat (14) of the leading edge of the wing (12) of the aircraft, as well as a closure panel (28) of the cutout (29), the nacelle being **characterized in that** the closure panel (28) comprises a fixed part relative to the nacelle at least partially covered by an upstream portion of the movable cowl (10) when the movable cowl (10) is in the open position.

2. The nacelle according to claim 1, **characterized in that** the cutout (29) of the movable cow does not extend to the upstream end of the movable cowl (10).

3. The nacelle according to claim 1 or 2, **characterized in that** the closure panel (28) is completely fixed in the nacelle.

4. The nacelle according to claim 1 or 2, **characterized in that** the closure panel (28) comprises a movable part (30) moving downstream of the nacelle with the sliding of the movable cowl (10).

5. The nacelle according to claim 4, **characterized in that** the thrust reverser includes means offsetting the movable part (30) of the closure panel (28) radially inwardly of the nacelle during its movement downstream of the nacelle.

6. The nacelle according to claim 4 or 5, **characterized in that** the movable part (30) of the closure panel (28) is upstream of the fixed part of the closure panel (28) when the movable cowl (10) is in the closed position.

7. The nacelle according to any one of the preceding claims, **characterized in that** the closure panel (28) includes a radially outer surface which is in the extension of that of the movable cowl (10) when said movable cowl (10) is in the closed position.

8. The nacelle according to any one of the preceding claims, **characterized in that** the movable cowl (10) includes on each side of the location intended to receive a beam (8) supporting the movable cowl (10), a cutout receiving a closure panel (28).

9. The nacelle according to any one of the preceding claims, **characterized in that** it comprises a secondary rail positioned on a beam (8) supporting the movable cowl (10).

10. An aircraft including a nacelle, **characterized in that** the nacelle is made according to any one of the preceding claims.
